# EUROPEAN PATENT APPLICATION

(11) **EP 4 746 121 A1**
(43) Date of publication of application: **20.05.2026**
(21) Application number: 24842371.7
(22) Date of filing: 16.07.2024
(51) Int. Cl.: H01M 10/613, H01M 10/655

(54) **BATTERY PACK**

(30) Priority: 20.07.2023 CN 202310898476
(71) Applicant: Eve Energy Co., Ltd., Huizhou, Guangdong 516006 (CN)
(72) Inventor: ZHAO, Yuhang, Guangdong 516006 (CN); QIN, Bo, Guangdong 516006 (CN); ZHOU, Xiao, Guangdong 516006 (CN); WANG, Rongrong, Guangdong 516006 (CN)
(74) Representative: Berggren Oy
(86) International application number: PCT/CN2024/105725
(87) International publication number: WO 2025/016382

(57) **Abstract**

Provided is a battery pack. The battery pack includes a housing, multiple battery cells, and at least one cooling assembly. The housing has a cavity for accommodating the battery cells and has a pressure-relief chamber corresponding to an explosion-proof valve of each of the battery cells. The cooling assembly is disposed on side portions of the battery cells along an arrangement direction of the battery cells. Each cooling assembly includes a cooling body and at least one protrusion connected to the cooling body, the cooling body abutting against a corresponding row of the battery cells, and the protrusion being inserted into the pressure-relief chamber.

## Description

This disclosure claims priority to the Chinese patent application No. 202310898476.0 filed on July 20, 2023 with the China National Intellectual Property Administration. The entire contents of the above application are incorporated herein by reference.

### TECHNICAL FIELD

The present disclosure relates to the field of battery technology, and more particularly to a battery pack.

### BACKGROUND

With the rapid development of new energy vehicles, users of pure electric vehicles demand ever-greater driving range and faster charging rates of the vehicles. The energy capacity of battery cells has increased, leading to greater heat generation during operation. At the same time, as the number of battery cells and the charging rate increase, maintaining temperature consistency between the battery cells becomes more challenging. A more efficient liquid cooling solution is needed to cool and equalize the temperatures of the battery cells.

In related art, a battery pack with cylindrical battery cells generates significant heat, and considering this situation, a serpentine-tube side liquid-cooling scheme is typically employed. In this scheme, serpentine tubes contact the sides of the battery cells, with a coolant flowing through the cavity of the serpentine tubes, thus achieving convective heat transfer with the battery cells.

Furthermore, cylindrical battery cells have the advantage of directing pressure downward during thermal runaway. To ensure safety of the passengers, it is crucial to manage heat diffusion following the thermal runaway of the cylindrical battery cells. Therefore, the design of pressure-relief paths and the structural strength of battery packs are critical to vehicle safety.

### SUMMARY

The present disclosure provides a battery pack to solve the above technical problems.

Some embodiments of the present disclosure provide a battery pack. The battery pack includes a housing, multiple battery cells, and at least one cooling assembly. The housing has a cavity for accommodating the battery cells and has a pressure-relief chamber corresponding to an explosion-proof valve of each of the battery cells. The cooling assembly is disposed on side portions of the battery cells along an arrangement direction of the battery cells. Each cooling assembly includes a cooling body and at least one protrusion connected to the cooling body, the cooling body abutting against a corresponding row of the battery cells, and the protrusion being inserted into the pressure-relief chamber.

### BENEFICIAL EFFECTS

The beneficial effects of the present disclosure are: The cooling assembly is disposed on the side portions of the battery cells along the arrangement direction of the battery cells, and the cooling assembly includes the cooling body and the at least one protrusion connected to the cooling body, the cooling body abutting against the battery cells, and the protrusion being inserted into the pressure-relief chamber; the present disclosure allows the protrusion to support the battery cells and the cooling body, enhancing the structural strength of the battery pack, and improving the temperature uniformity of the battery cells, while guiding the heat diffusion after thermal runaway of the battery cells, and improving safety.

### BRIEF DESCRIPTION OF THE DRAWINGS

FIG. 1 is an exploded view of a battery pack according to some embodiments of the present disclosure.
FIG. 2 is a side view of a cooling assembly according to some embodiments of the present disclosure.
FIG. 3 is a perspective view of a cooling assembly according to some embodiments of the present disclosure.
FIG. 4 is a structural schematic view of a cooling pipe according to some embodiments of the present disclosure.
FIG. 5 is a schematic view of the bottom of a cooling assembly according to some embodiments of the present disclosure.
FIG. 6 is a schematic view of a pressure-relief chamber according to some embodiments of the present disclosure.
FIG. 7 is a schematic view of a battery pack after its assembly according to some embodiments of the present disclosure.

### EMBODIMENTS OF THE INVENTION

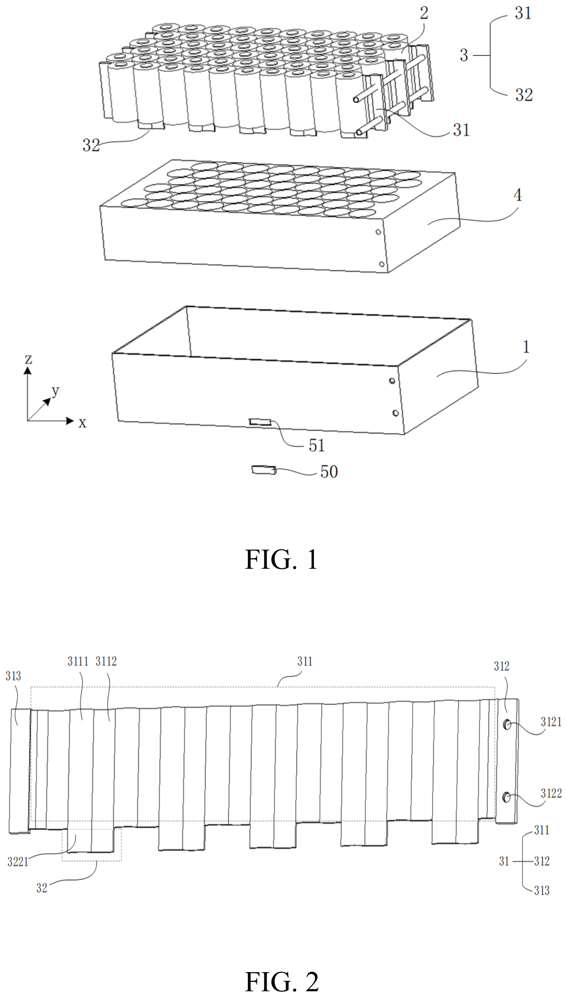

FIG. 1 illustrates an exploded view of a battery pack according to some embodiments of the present disclosure. As shown in FIG. 1, the battery pack may include a housing 1, multiple battery cells 2, and at least one cooling assembly 3. The housing 1 may be a cuboid with an upward-facing opening. A cavity is provided within the housing 1, and is configured to accommodate the battery cells 2.

Referring to FIG. 1, the battery cells 2 may be arranged in rows, with adjacent rows of battery cells 2 staggered. For example, in FIG. 1, the battery cells 2 may be arranged in rows along a row direction (i.e., the x-direction), and the alternate rows of battery cells 2 may be arranged along the y-direction, which is perpendicular to the row direction. Specifically, all the battery cells 2 are arranged in alternating odd-numbered and even-numbered rows, with the arrangement of the odd-numbered rows of battery cells 2 being consistent, and the arrangement of the even-numbered rows of battery cells 2 being consistent. In these arrangements, the odd-numbered rows are arranged along the y-direction, and a battery cell 2 in one odd-numbered row and its corresponding battery cell(s) 2 in other odd-numbered row(s) are aligned along a straight line along the y-direction; the even-numbered rows are arranged along the y-direction, and a battery cell 2 in one even-numbered row and its corresponding battery cell(s) 2 in other even-numbered row(s) are aligned along a straight line along the y-direction. These arrangements allow for a more compact layout of the battery cells 2, improving the energy density of the battery pack and saving space.

In an embodiment, each cooling assembly 3 may be disposed on side portions of the battery cells 2 in a corresponding row along the row direction of the battery cells 2. Multiple cooling assemblies 3 may be arranged sequentially along the y-direction. Optionally, each cooling assembly 3 may be provided in a gap between two adjacent rows of battery cells 2 extending along a height direction of the battery cells 2.

The number of the cooling assemblies 3 may be one or more. When multiple cooling assemblies 3 are provided, two adjacent cooling assemblies 3 may be disposed on two opposite sides of the same row of battery cells 2, respectively. Alternatively, two adjacent cooling assemblies 3 may be disposed on two opposite sides of two adjacent rows of battery cells 2, so that the paths along which the two adjacent cooling assemblies 3 extend along the row direction of the battery cells 2 are consistent with each other, rather than being staggered. This arrangement improves the structural of the battery pack, and reduces the number of cooling assemblies, thus lowering costs and reducing the overall weight of the battery pack.

In an embodiment, as shown in FIG. 1, each cooling assembly 3 includes a cooling body 31 and at least one protrusion 32 connected to the cooling body 31. The cooling body 31 and the at least one protrusion 32 are disposed along the height direction of the battery cells 2. The cooling body 31 abuts against a corresponding row of battery cells 2. A portion of the cooling body 31 may contact the corresponding row of battery cells 2, while other portion of the cooling body 31 forms a gap with the battery cells 2. Multiple protrusions 32 are spaced apart along the row direction of the battery cells 2, and the space between two adjacent protrusions 32 can be referred to as a hollow area.

The bottom of a serpentine cooling plate may be designed to have local hollow areas to form the at least one protrusion. In the embodiments of the present disclosure, the protrusion can support the battery cells and the cooling body, and can enhance the structural strength of the battery pack.

In an embodiment, the cooling body 31 and the protrusion 32 may be hollow structures, and communicate with each other to form a U-shaped structure. This configuration further contributes to uniform temperature distribution among the battery cells and addresses the high-temperature issues associated with fast charging of large cylindrical batteries.

FIG. 2 illustrates a side view of a cooling assembly according to some embodiments of the present disclosure. Referring to FIG. 2, the cooling body 31 includes a first sub-body 311, and a second sub-body 312 and a third sub-body 313 which are respectively disposed at two sides of the first sub-body 311.

In an embodiment, the first sub-body 311 extends along the row direction of the battery cells 2. The first sub-body 311 may be of a serpentine (or wave-like) structure.

In an embodiment, the first sub-body 311 includes multiple first curved surfaces 3111, and the first curved surfaces contact with the side portions of the corresponding rows of battery cells 2. For example, in FIG. 2, each first curved surface 3111 is adjacent to a corresponding first curved surface 3112, and a corresponding protrusion 32 may be connected to the first curved surface 3111 and the first curved surface3112. That is, the protrusion 32 may be connected to two adjacent first curved surfaces 3111.

In an embodiment, as shown in FIG. 2, the second sub-body 312 and the third sub-body 313 are connected to the first sub-body 311. Optionally, the second sub-body 312 may be integrally formed with the first sub-body 311, and the third sub-body 313 may be integrally formed with the first sub-body 311.

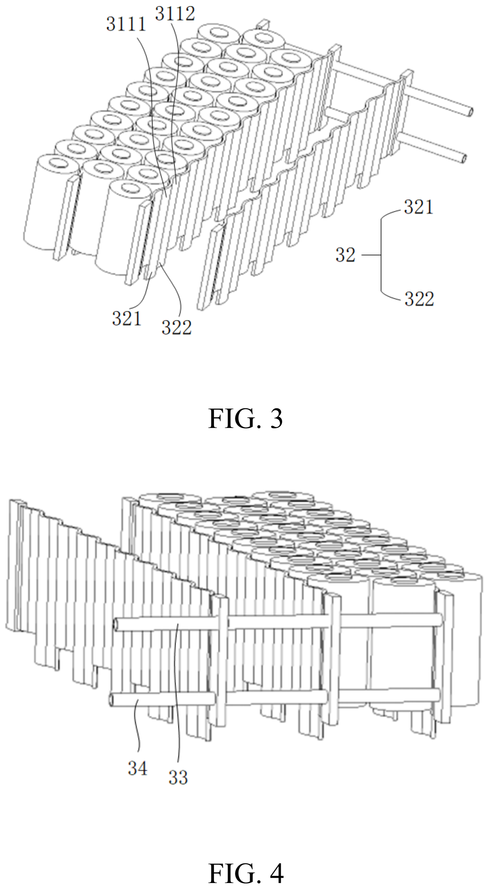

FIG. 3 illustrates a perspective view of a cooling assembly according to some embodiments of the present disclosure. It is noted that, for better illustration of the specific structure of the cooling assembly, one row of battery cells (such as those shown in FIG. 1) has been omitted in FIG. 3. In practice, this row of battery cells may be positioned between two cooling assemblies. Referring to FIG. 3, from a top-down view, the first sub-body 311 of each cooling assembly 3 is of a serpentine structure and extends along the row direction of the battery cells 2.

In an embodiment, each protrusion 32 may include a first protrusion portion 321 and a second protrusion portion 322 connected to the first protrusion portion 321. The first protrusion portion 321 is located directly below the first curved surface 3111 and is connected to the first curved surface 3111, and the second protrusion portion 322 is located directly below the first curved surface 3112 and is connected to the first curved surface 3112. In other words, the first protrusion portion 321 and the second protrusion portion 322 may be connected to the two adjacent first curved surfaces, respectively.

In an embodiment, a bending direction of the first curved surface connected to the first protrusion portion 321 is opposite to a bending direction of the first curved surface connected to the second protrusion portion 322. For example, the first curved surface 3111 may bend in the y-direction as shown in FIG. 1, while the first curved surface 3112 may bend in a direction opposite the y-direction. In some embodiments, the first curved surface 3112 may bend in the y-direction as shown in FIG. 1, and the first curved surface 3111 may bend in the direction opposite the y-direction. The protrusion is connected to the two curved surfaces with opposite bending directions, respectively, which balances the support provided by the protrusion to the first sub-body, thus making the structure of the cooling assembly more stable.

In an embodiment, the first protrusion portion 321 and the second protrusion portion 322 each are equipped with a second curved surface 3221. Further, the first protrusion portion 321 and the second protrusion portion 322 each are equipped with the second curved surface 3221, and a bending direction of each second curved surface is the same as the bending direction of the first curved surface connected to the second curved surface. This arrangement ensures that the paths along which the first protrusion portion 321 and the second protrusion portion 322 extend are consistent with the paths along which the corresponding first sub-body 311 extend, respectively, providing better support and facilitating the integration of the protrusion with the first sub-body in a single mold.

It is noted that the first protrusion portion 321 and the second protrusion portion 322 may also have other shapes, such as triangular shapes. The first protrusion portion 321 is integrally formed with the first curved surface 3111, and the second protrusion portion 322 is integrally formed with the first curved surface 3112. In practical applications, the first protrusion portion 321 and the second protrusion portion 322 may be appropriately deformed as needed, and the present disclosure does not limit this.

FIG. 4 is a structural schematic view of a cooling pipe according to some embodiments of the present disclosure. Referring to FIGS. 2 and 4, the second sub-body 312 has at least one connection hole 3121 for passing a cooling pipe. The cooling pipe may be either a liquid inlet pipe 33 or a liquid outlet pipe 34. Specifically, the second sub-body 312 may have two connection holes, namely an inlet 3121 and an outlet 3122, both of which may be connection holes penetrating through the second sub-body 312. The inlet 3121 is for the liquid inlet pipe 33 to extend through, and the liquid inlet pipe 33 is mounted on the second sub-body 312; the outlet 3122 is for the liquid outlet pipe 34 to extend through, and the liquid outlet pipe 34 is mounted on the second sub-body 312. The inlet 3121 and the outlet 3122 may be arranged along the height direction of the battery cells 2, thus saving space in the row direction of the battery cells.

In an embodiment, a coolant flows into the liquid inlet pipe 33 and is then diverted into the corresponding cooling assemblies, which carry away the heat from the battery cells, and then flows out through the liquid outlet pipe 34, thereby forming a heat exchange cycle. It is worth noting that the positions of the liquid inlet pipe 33 and the liquid outlet pipe 34 provided herein are relative, not absolute, and the relative positions of the liquid inlet pipe 33 and the liquid outlet pipe 34 may be determined based on practical needs.

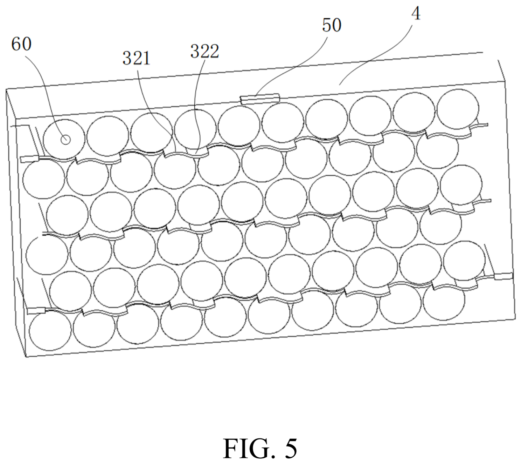

FIG. 5 illustrates a schematic view of the bottom of a cooling assembly according to some embodiments of the present disclosure. As shown in FIG. 5, from the bottom of the cooling assembly looking upwards, the first protrusion portion 321 and the second protrusion portion 322 may contact with the side portions of the battery cells in different rows, respectively. For example, regarding the uppermost row of battery cells shown in FIG. 5 as the first row of battery cells, the second protrusion portion 322 contacts with the battery cell in the first row, and the first protrusion portion 321 contacts with the battery cell in the second row. The battery cell that the first protrusion portion 321 contacts with neighbors the battery cell that the second protrusion portion 322 contacts with.

In an embodiment, foam adhesive 4 is filled between the cooling body 31 and the battery cells 2. In practical applications, foam adhesive 4 may also be filled between the battery cells and sidewalls of the housing 1. Referring to FIGS. 1 and 5, the filled foam adhesive 4 may conform to the sidewalls of the housing 1 in terms of overall appearance, such as being a cuboid.

The foam adhesive 4 has both foaming and bonding properties and may be used to bond the cooling body 31 and the battery cells 2. Because of the bonding effect of the foam adhesive 4, the cooling body 31 and the battery cells 2 may be regarded as a single entity, and at least one protrusion 32 may serve to support this entity.

By filling the foam adhesive between the cooling body and the battery cells, and by bonding the battery cells to the housing using the foam adhesive, the overall structural strength of the battery pack is enhanced in the embodiment of the present disclosure, further balancing the temperature of the battery cells, improving the temperature consistency between the battery cells, and providing better insulation under low-temperature conditions.

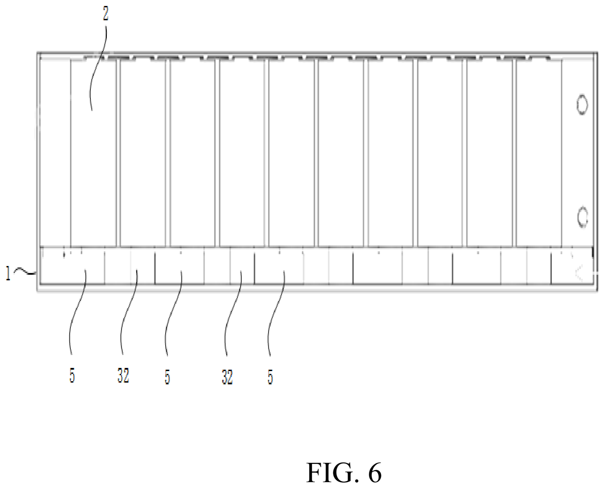

FIG. 6 illustrates a schematic view of a pressure-relief chamber according to some embodiments of the present disclosure. Referring to FIG. 6, a top of the protrusion 32 is connected to the cooling body 31, and a bottom of the protrusion 32 contacts with the bottom of the housing 1, thus forming the pressure-relief chamber 5.

Referring to FIGS. 1 and 6, a sidewall of the housing 1 is provided with a pressure-relief valve 50. The housing 1 is also provided with the pressure-relief chamber 5 corresponding to explosion-proof valves 60 of the battery cells 2. The protrusion 32 abuts against the housing 1 and is inserted into the pressure-relief chamber 5. Bottom portions of the battery cells 2, the at least one protrusion 32, and the bottom of the housing 1 together form the pressure-relief chamber 5. The pressure-relief valve 50 is configured to open when a target battery cell undergoes thermal runaway, thus reducing the pressure inside the pressure-relief chamber 5. Optionally, the sidewall of the housing 1 may be provide with an opening 51, and the pressure-relief valve 50 is installed in the opening 51.

Multiple protrusions can form a pressure-relief passage, so that when a battery cell undergoes thermal runaway, the pressure will be directed out of the battery pack through the pressure-relief passage, thus reducing the risk of thermal runaway and improving vehicle safety. Moreover, the pressure-relief passage is formed by a part of the cooling assembly, which reduces the cost of the battery pack and improves assembly efficiency.

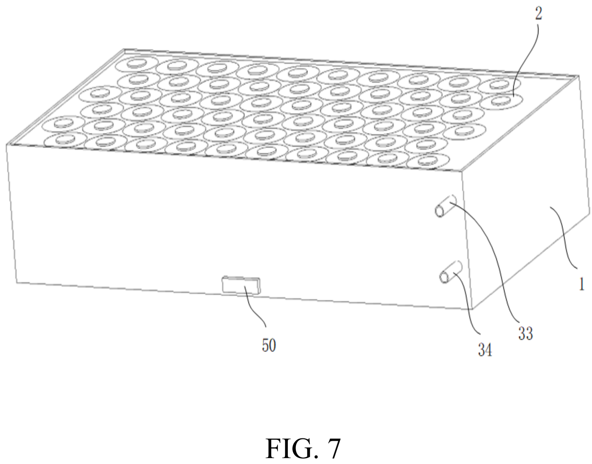

FIG. 7 illustrates a schematic view of a battery pack after its assembly according to some embodiments of the present disclosure. As shown in FIG. 6, when the battery cells 2 are installed in the housing 1, and the foam adhesive 4 is filled between the battery cells 2, between the battery cells 2 and the cooling assembly 3, and between the battery cells 2 and the sidewalls of the housing 1, the battery pack after assembly is obtained as shown in FIG. 7. The liquid inlet pipe 33 and the liquid outlet pipe 34 may protrude from an outer surface of the housing 1 to load the cooling medium. The pressure-relief valve 50 is located on the outer surface of the housing 1 for easy opening.

In summary, in the embodiments of the present disclosure, the cooling assembly is disposed on the side portions of the battery cells along the arrangement direction of the battery cells, the cooling assembly includes the cooling body and the at least one protrusion connected to the cooling body, the cooling body abuts against the battery cells, and the protrusion abuts against the housing and is inserted into the pressure-relief chamber. This arrangement allows the protrusion to support the battery cells and the cooling body, enhancing the structural strength of the battery pack, and improving the temperature uniformity of the battery cells, while guiding the heat diffusion after thermal runaway of the battery cells, improving safety, reducing the cost of the battery pack, and improving assembly efficiency.

## Claims

1. A battery pack, comprising:
a housing (1) having a cavity for accommodating a plurality of battery cells (2) and having a pressure-relief chamber (5) corresponding to an explosion-proof valve (60) of each of the plurality of battery cells (2);
the plurality of battery cells (2); and
at least one cooling assembly (3) disposed on side portions of the plurality of battery cells (2) along an arrangement direction of the plurality of battery cells (2);
wherein each cooling assembly (3) comprises a cooling body (31) and at least one protrusion (32) connected to the cooling body (31), the cooling body (31) abutting against a corresponding row of the plurality of battery cells (2), and the at least one protrusion (32) being inserted into the pressure-relief chamber (5).

2. The battery pack according to claim 1, wherein the at least one protrusion (32) abuts against the housing (1).

3. The battery pack according to claim 1, wherein the cooling body (31) and the at least one protrusion (32) are arranged along a height direction of the plurality of battery cells (2); two adjacent rows of the plurality of battery cells (2) are staggered; and two adjacent cooling assemblies (3) of the at least one cooling assembly (3) are respectively positioned on two opposite sides of the two adjacent rows of the plurality of battery cells (2).

4. The battery pack according to claim 1, wherein the cooling body (31) comprises a first sub-body (311) extending along the arrangement direction of the plurality of battery cells (2).

5. The battery pack according to claim 4, wherein the first sub-body (311) is of a serpentine structure; and the first sub-body (311) comprises a plurality of first curved surfaces (3111) contacting with the side portions of the corresponding row of the plurality of battery cells (2).

6. The battery pack according to claim 5, wherein each of the at least one protrusion (32) comprises:
a first protrusion portion (321); and
a second protrusion portion (322) connected to the first protrusion portion (321), the first protrusion portion (321) and the second protrusion portion (322) being connected to two adjacent first curved surfaces of the plurality of first curved surfaces, respectively.

7. The battery pack according to claim 6, wherein a bending direction of the first curved surface connected to the first protrusion portion (321) is opposite to a bending direction of the first curved surface connected to the second protrusion portion (322).

8. The battery pack according to claim 6, wherein the first protrusion portion (321) and the second protrusion portion (322) each have a second curved surface (3221), a bending direction of the second curved surface being the same as a bending direction of a corresponding first curved surface connected to the second curved surface.

9. The battery pack according to claim 4, wherein the cooling body (31) further comprises:
a second sub-body (312); and
a third sub-body (313), the second sub-body (312) and the third sub-body (313) being disposed at two sides of the first sub-body (311), respectively, and the second sub-body (312) having at least one connection hole (3121) for passing a cooling pipe.

10. The battery pack according to any one of claims 1 to 9, wherein foam adhesive (4) is filled between the cooling body (31) and the plurality of battery cells (2), and the foam adhesive (4) is configured to bond the cooling body (31) and the plurality of battery cells (2).

11. The battery pack according to any one of claims 1 to 9, wherein a pressure-relief valve (50) is provided on a sidewall of the housing (1), the pressure-relief valve (50) communicates with the pressure-relief chamber (5), and the pressure-relief valve (50) is configured to open in a case where a target battery cell undergoes thermal runaway, to reduce a pressure inside the pressure-relief chamber (5).

12. The battery pack according to any one of claims 1 to 9, wherein the cooling body (31) and the at least one protrusion (32) are integrally formed.
